# EUROPEAN PATENT APPLICATION

(11) **EP 4 378 722 A1**
(43) Date of publication of application: **05.06.2024**
(21) Application number: 22859810.8
(22) Date of filing: 18.02.2022
(51) Int. Cl.: B60K 1/02, B60K 17/04

(54) **POWER ASSEMBLY AND ELECTRIC VEHICLE**

(30) Priority: 24.08.2021 CN 202121998056 U
(71) Applicant: Huawei Technologies Co., Ltd., Shenzhen, Guangdong 518129 (CN)
(72) Inventor: WEI, Jingzhou, Shenzhen, Guangdong 518129 (CN); CAO, Yi, Shenzhen, Guangdong 518129 (CN); MA, Wenwu, Shenzhen, Guangdong 518129 (CN); TANG, Zhengyi, Shenzhen, Guangdong 518129 (CN)
(74) Representative: Isarpatent
(86) International application number: PCT/CN2022/076732
(87) International publication number: WO 2023/024451

(57) **Abstract**

This application provides a powertrain and an electric vehicle, relating to the field of motor technologies. In the powertrain, two driving motors are disposed in parallel. In this way, a length of the entire powertrain is shortened, and the powertrain is not excessively long to be disposed in reserved space of the vehicle. To prevent occupying space of a passenger compartment, a battery pack, a trunk, and the like, reserved space for disposing the powertrain on an existing mainstream vehicle is more on one side relative to a wheel shaft. Therefore, in the powertrain designed in this application, when two reducers respectively mesh with the two driving motors, neither output shafts of the two reducers are on a plane that is perpendicular to a connection line of centers of the two driving motors and at a contact position between the two driving motors. In other words, the two output shafts are disposed on one side of the entire powertrain, so that the powertrain can be disposed on a mainstream vehicle, and adaptability of the powertrain is improved.

## Description

This application claims priority to Chinese Patent Application No. 202121998056.2, filed with the China National Intellectual Property Administration on August 24, 2021 and entitled "POWERTRAIN AND ELECTRIC VEHICLE", which is incorporated herein by reference in its entirety.

### TECHNICAL FIELD

The present invention relates to the field of motor technologies, and in particular, to a powertrain and an electric vehicle.

### BACKGROUND

An electric drivetrain is one of core components on a new energy vehicle. After generating driving power, a driving motor in the electric drivetrain distributes the driving power to wheels on two sides of the vehicle by using a differential, to implement traveling of the vehicle. If the vehicle is in different turning conditions, the differential needs to distribute two driving power with different values to the wheels on the two sides of the vehicle, so that the vehicle can turn and travel in different turning conditions.

However, an existing differential can only distribute two driving power with a same value or two driving power with a fixed difference to the wheels on the two sides of the vehicle, and cannot randomly distribute driving power with different values to the wheels on the two sides of the vehicle. This limits turning performance of the vehicle.

### SUMMARY

To resolve the foregoing problem, embodiments of this application provide a powertrain and an electric vehicle. Two driving motors are disposed in parallel, and output shafts of reducers meshing with the two driving motors are in a straight line and not on a plane that is perpendicular to a connection line of centers of the two driving motors and at a contact position between the two driving motors. In this way, a length of the entire powertrain is shortened, and the powertrain is not excessively long to be disposed in reserved space of the vehicle. In addition, the two output shafts are disposed on one side of the entire powertrain, so that the powertrain can be disposed on a mainstream vehicle, and adaptability of the powertrain is improved.

Therefore, the following technical solutions are applied in embodiments of this application.

According to a first aspect, an embodiment of this application provides a powertrain, including: a first driving motor, a second driving motor, a first reducer, and a second reducer. The first driving motor includes a first motor shaft, and is configured to drive the first motor shaft to rotate when powered on. The second driving motor is disposed in parallel with the first driving motor, includes a second motor shaft, and is configured to drive the second motor shaft to rotate when powered on. The first reducer includes a first output shaft, and is configured to: mesh with the first motor shaft, convert a driving moment of a first rotating speed on the first motor shaft into a driving moment of a second rotating speed, and output the driving moment of the second rotating speed to the first output shaft. The first rotating speed is faster than the second rotating speed. The second reducer includes a second output shaft, and is configured to mesh with the second motor shaft, convert a driving moment of a third rotating speed on the second motor shaft into a driving moment of a fourth rotating speed, and output the driving moment of the fourth rotating speed to the second output shaft. The third rotating speed is faster than the fourth rotating speed. Neither the first output shaft and the second output shaft are on a first plane, and an extension direction of the first output shaft and an extension direction of the second output shaft are in a straight line. The first plane is a plane that is perpendicular to a connection line of centers of the two driving motors and at a contact position between the two driving motors.

In this implementation, two driving motors are disposed in parallel. In this way, a length of the entire powertrain is shortened, and the powertrain is not excessively long to be disposed in reserved space of the vehicle. To prevent occupying space of a passenger compartment, a battery pack, a trunk, and the like, reserved space for disposing the powertrain on an existing mainstream vehicle is more on one side relative to a wheel shaft. Therefore, in the powertrain designed in this application, when two reducers respectively mesh with the two driving motors, neither output shafts of the two reducers are on a plane where a tangent line of the contact position between the two driving motors is located. In other words, two output shafts are disposed on one side of the entire powertrain, so that the powertrain can be disposed on a mainstream vehicle, and adaptability of the powertrain is improved.

In an implementation, the extension direction of the first output shaft, the extension direction of the second output shaft, and an extension direction of the first motor shaft are in a straight line.

In this embodiment, the extension directions of the two output shafts and the extension direction of the motor shaft of one driving motor are in a straight line. This can prevent a situation in which the powertrain is completely on one side of a wheel shaft, excessively occupying space on one side of the wheel shaft.

In an implementation, the first reducer is a two-stage coaxial shaft reducer, and the second reducer is a two-stage parallel shaft reducer.

In this embodiment, because the two output shafts need to be located on one side of the first driving motor, the second reducer is designed as the two-stage parallel shaft reducer, to ensure that a distance between an input shaft and the output shaft of the second reducer is relatively large. In this case, the output shaft is located on one side of the first driving motor after the input shaft connects to the second driving motor. The first reducer is designed as the two-stage coaxial shaft reducer, to ensure that a distance between an input shaft and the output shaft of the first reducer is relatively small. In this case, the output shaft is still located on one side of the first driving motor after the input shaft connects to the first driving motor.

In an implementation, the two-stage coaxial shaft reducer is a coaxial shaft planetary reducer.

In an implementation, the first reducer and the second reducer are both a single-gear reducer, a double-gear reducer, or a multi-gear reducer.

In this embodiment, the reducers disposed on the two driving motors should be reducers with a same gear number, to prevent a situation in which when wheels on the two sides of the vehicle are controlled, adjustable speeds of the wheels on the two sides are inconsistent.

In an implementation, side faces at two ends of the first driving motor and side faces at two ends of the second driving motor are not on a same plane.

In this embodiment, during assembly of the powertrain, side edges at two ends of two driving motors may be allowed to be not on one plane. In other words, positions where the two driving motors are disposed are staggered. In this case, a raised magnetic flux winding port on a housing of one driving motor is on one side of the other driving motor, housings of the two driving motors are in close contact, and a structure of the powertrain is more compact.

In an implementation, a plane on which the first motor shaft and the second motor shaft are located intersects with a horizontal plane.

In this embodiment, during assembly of the powertrain, a plane on which two motor shafts of two driving motors are located may be allowed to intersect with a plane on which the two driving motors are disposed on the entire vehicle. In other words, the two driving motors may be disposed in reserved space of various shapes, to reduce a position limitation and an assembly difficulty of disposing the powertrain.

In an implementation, the first driving motor and the second driving motor are disposed in opposite directions.

In this embodiment, the powertrain is usually disposed between wheel shafts on the two sides of the vehicle. Therefore, the motor shafts of the two driving motors are disposed in opposite directions. In this case, the two reducers coupled to the two driving motors can be disposed on two sides of the two driving motors 3, so that the output shafts of the two reducers can subsequently better connect to the wheel shafts on the two sides of the vehicle.

According to a second aspect, an embodiment of this application provides an electric vehicle. The electric vehicle is configured to implement the powertrain according to the possible implementations of the first aspect.

### BRIEF DESCRIPTION OF DRAWINGS

The following briefly describes accompanying drawings for describing embodiments or a conventional technology.
FIG. 1 is a schematic diagram of a structure of a powertrain according to a conventional technology;
FIG. 2 is a schematic diagram of a structure of another powertrain according to a conventional technology;
FIG. 3 is a position relationship of reserved space for a powertrain on a chassis of an existing vehicle;
FIG. 4 is a schematic diagram of a structure of a powertrain according to an embodiment of this application;
FIG. 5 is a first schematic diagram of a relative position relationship between two driving motors according to an embodiment of this application;
FIG. 6 is a second schematic diagram of a relative position relationship between two driving motors according to an embodiment of this application; and
FIG. 7 is a third schematic diagram of a relative position relationship between two driving motors according to an embodiment of this application.

### DESCRIPTION OF EMBODIMENTS

The following describes technical solutions in embodiments of this application with reference to accompanying drawings in embodiments of this application.

In descriptions of this application, orientation or location relationships indicated by terms "center", "above", "below", "front", "back", "left", "right", "vertical", "horizontal", "top", "bottom", "inner", "outer", and the like are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In descriptions of this application, it should be noted that unless otherwise expressly specified and limited, terms "dispose", "interconnect", and "connect" should be understood in a broad sense. For example, such terms may indicate a fixed connection, a detachable connection, an abutting connection or an integral connection. Persons of ordinary skill in the art may understand specific meanings of the foregoing terms in this application according to specific cases.

In descriptions of this specification, specific features, structures, materials, or characteristics may be combined in a suitable manner in any one or more embodiments or examples.

To improve turning performance of a vehicle, two driving motors and two reducers may be arranged on the vehicle. Each driving motor is coupled to a wheel shaft on one side of the vehicle through the reducer. Different driving motors are separately controlled, the vehicle can be controlled to turn in different turning conditions, to improve the turning performance of the vehicle.

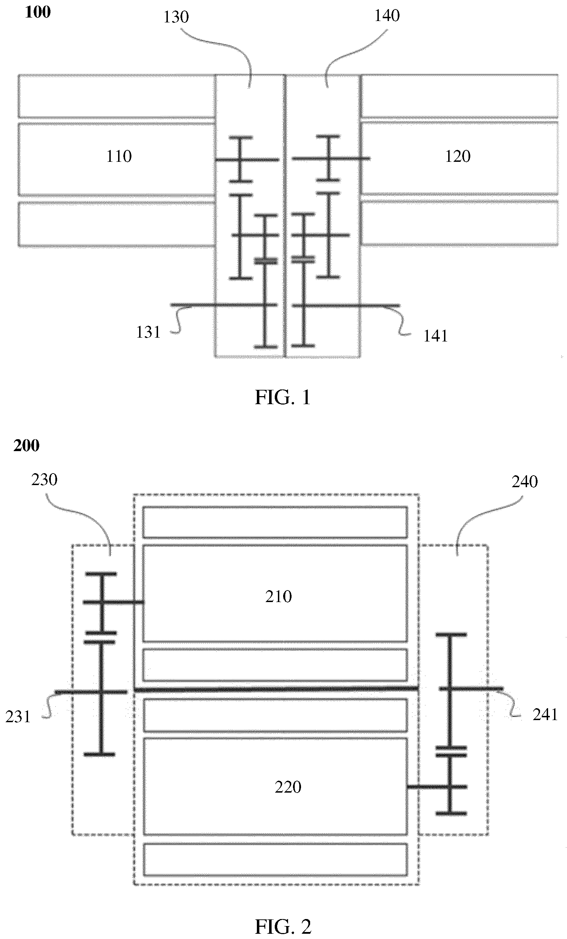

FIG. 1 is a schematic diagram of a structure of a powertrain according to the conventional technology. As shown in FIG. 1, the powertrain 100 includes two driving motors: a driving motor 110 and a driving motor 120, and two reducers: a reducer 130 and a reducer 140. The driving motor 110 and the driving motor 120 are disposed in a straight line, and motor shafts of the two driving motors are oriented close to each other. An input shaft of the reducer 130 is coupled to the motor shaft of the driving motor 110 through a spline (not shown in the figure). An input shaft of the reducer 140 is coupled to the motor shaft of the driving motor 120 through a spline (not shown in the figure). An output shaft 131 of the reducer 130 and an output shaft 141 of the reducer 140 are located on outer sides of the two driving motors and arranged in a straight line, and the two output shafts are oriented away from each other.

In the conventional technology, when the powertrain 100 is disposed on the vehicle, and the output shaft of the reducer 130 and the output shaft of the reducer 140 are respectively coupled to wheels on two sides of the vehicle, the driving motor 110, the reducer 130, the reducer 140, and the driving motor 120 are in a straight line successively. Therefore, space between the wheels on two sides of the vehicle is insufficient, and a width of the vehicle needs to be increased. This reduces adaptability of the entire vehicle.

FIG. 2 is a schematic diagram of a structure of another powertrain according to a conventional technology. As shown in FIG. 2, the powertrain 200 includes two driving motors: a driving motor 210 and a driving motor 220, and two reducers: a reducer 230 and a reducer 240. The driving motor 210 and the driving motor 220 are disposed in parallel, and motor shafts of the two driving motors are oriented away from each other. An input shaft of the reducer 230 is coupled to the motor shaft of the driving motor 210 through a spline (not shown in the figure). An input shaft of the reducer 240 is coupled to the motor shaft of the driving motor 220 through a spline (not shown in the figure). An output shaft 231 of the reducer 230 and an output shaft 241 of the reducer 240 are located in the middle of the two driving motors and arranged in a straight line, and the two output shafts are oriented away from each other.

In the conventional technology, the two driving motors are arranged in parallel in the powertrain 200. This effectively shortens a length of the entire powertrain, and resolves the foregoing problem of insufficient space between the wheels on the two sides of the vehicle in the conventional technology. However, because the two driving motors are arranged in parallel, the output shafts of the two reducers are located in the middle of the two driving motors. This poses a new problem. To prevent occupying space of a trunk, a passenger compartment and a battery pack of the vehicle, space for disposing the powertrain is usually more on one side of a wheel shaft on a bottom plate of an existing vehicle. As a result, the powertrain 200 cannot be disposed on the existing vehicle.

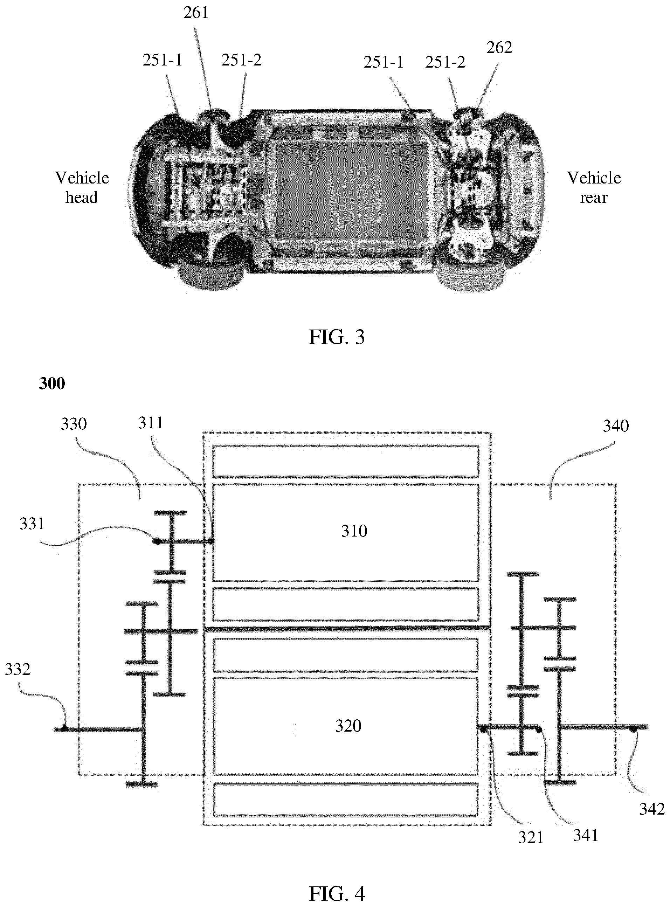

For example, as shown in FIG. 3, space 251 for the powertrain disposed on a front wheel 261 of the vehicle is closer to a vehicle head side than to a front wheel shaft 261. In this case, space 251-1 on one side of the front wheel shaft 261 is larger than space 251-2 on the other side, to prevent occupying the space of the passenger compartment and the battery pack. Space 252 for the powertrain disposed on a rear wheel 262 of the vehicle is closer to a vehicle rear side than to a rear wheel shaft 262. In this case, the space 252-1 on one side of the rear wheel shaft 262 is smaller than the space 252-2 on the other side, to prevent occupying the space of the passenger compartment and the battery pack. Therefore, it can be seen that the powertrain 200 cannot be disposed in the space 251 and the space 252. This reduces adaptability of the entire vehicle.

To resolve the problem of adaptability reduction of the entire vehicle in two solutions of the conventional technology, a new powertrain is designed in this application, specifically as follows.

As shown in FIG. 4, the powertrain 300 includes a first driving motor 310, a second driving motor 320, a first reducer 330, and a second reducer 340. A structure and a connection manner of the plurality of components are specifically as follows.

The first driving motor 310 and the second driving motor 320 are arranged in parallel. In this application, two driving motors are disposed in parallel. In this way, a length of the powertrain 300 is shortened, and the powertrain 300 is not excessively long to be disposed in reserved space on a chassis of the vehicle. Even if the powertrain may be disposed in the reserved space by shortening a length of the driving motor or compressing a thickness of the reducer, or the like, performance of a chassis suspension is reduced.

The first driving motor 310 and the second driving motor 320 may be oppositely disposed, in other words, two motor shafts extend in opposite directions. The powertrain is usually disposed between wheel shafts on two sides of the vehicle. Therefore, the motor shafts of the two driving motors are disposed in opposite directions. In this case, the first reducer 330 and the second reducer 340 coupled to the two driving motors can be disposed on two sides of the first driving motor 310 and the second driving motor 320, so that the output shafts of the two reducers can subsequently better connect to the wheel shafts on the two sides of the vehicle. Optionally, the first driving motor 310 and the second driving motor 320 may alternatively be disposed in a same direction. This is not limited herein in this application.

Side faces at two ends of the first driving motor 310 and side faces at two ends of the second driving motor 320 may be on one plane, or may not be on one plane. If the side faces at the two ends of the first driving motor 310 and the side faces at the two ends of the second driving motor 320 are on one plane, a structure of the entire powertrain 300 is symmetrical and more beautiful. Alternatively, the side faces at the two ends of the first driving motor 310 and the side faces at the two ends of the second driving motor 320 may be not on one plane. In other words, the two driving motors may be staggered by a specific distance from each other. In this case, a raised magnetic flux winding port on a housing of one driving motor is on one side of the other driving motor, housings of the two driving motors are in close contact, and the structure of the powertrain is more compact.

A plane on which a first motor shaft 311 of the first driving motor 310 and a second motor shaft 321 of the second driving motor 320 are located may be parallel to a horizontal plane, or may intersect with a horizontal plane. With development of an intelligent vehicle, more and more components are assembled on the vehicle, less and less space can be used for assembly in the vehicle, and space for disposing the two driving motors is relatively limited. Therefore, it is not always possible to find one reserved space that allows the plane on which the motor shafts of the two driving motors are located to be parallel to the horizontal plane. Therefore, the two driving motors may be disposed in any direction in the reserved space on a bottom plate of the vehicle, to reduce a position limitation and an assembly difficulty of disposing the powertrain.

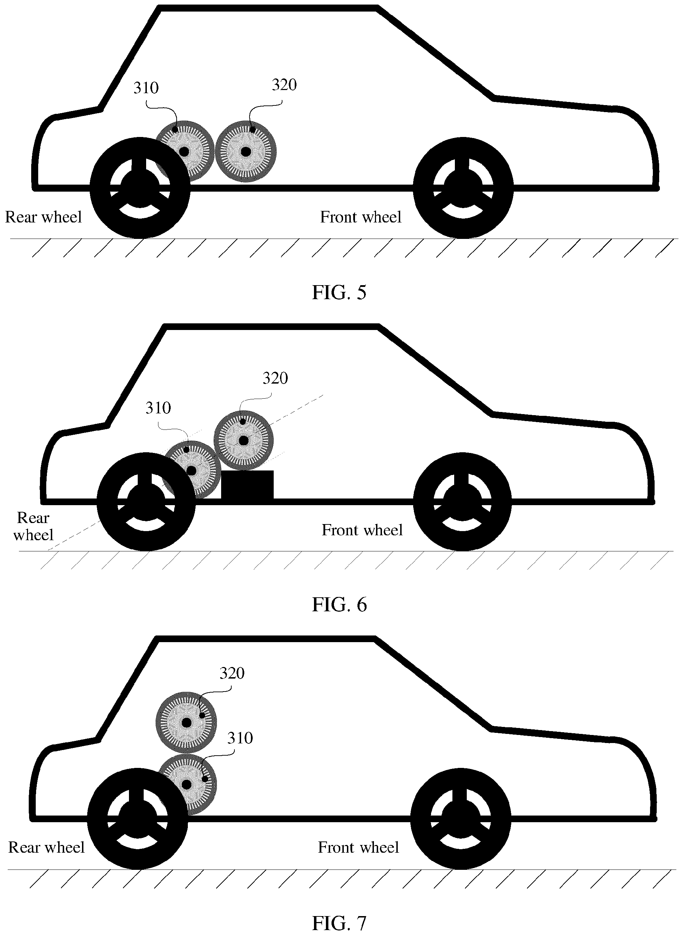

For example, the first driving motor 310 and the second driving motor 320 may be disposed in a manner as shown in FIG. 5, that is, the two driving motors may be disposed on a horizontal bottom plate. In this case, the plane on which the motor shafts of the two driving motors are located is parallel to the horizontal plane. Alternatively, the first driving motor 310 and the second driving motor 320 may be disposed in a manner as shown in FIG. 6, that is, the first driving motor 310 is disposed on the bottom plate, and the second driving motor 320 is disposed on one component. In this case, the plane on which the motor shafts of the two driving motors are located intersects with the horizontal plane. Alternatively, the first driving motor 310 and the second driving motor 320 may be disposed in a manner as shown in FIG. 7, that is, the first driving motor 310 is disposed on the bottom plate, the second driving motor 320 is disposed on the first driving motor 310. In this case, the plane on which the motor shafts of the two driving motors are located is perpendicular to the horizontal plane. Alternatively, the first driving motor 310 and the second driving motor 320 may be disposed in another manner. This is not limited herein in this application.

In this application, categories of the first driving motor 310 and the second driving motor 320 are not limited. The first driving motor 310 and the second driving motor 320 may be of different categories such as a radial magnetic field permanent magnet motor and an axial magnetic field permanent magnet motor. Types of motors are not limited either. The first driving motor 310 and the second driving motor 320 may be of different types such as a 4-pole 12-slot motor and a 6-pole 54-slot motor. In addition, the first driving motor 310 and the second driving motor 320 may be the same or different in the type or category. This is not limited herein in this application either.

The reducer usually includes an input shaft, an output shaft, and a plurality of gears. One end of the input shaft connects to the motor shaft of the driving motor through a connection device such as a spline, and the other end of the input shaft is embedded into and fastened to one gear. One end of the output shaft is embedded into and fastened to one gear, and the other end of the output shaft connects to the wheel shaft through another component. The plurality of gears mesh with each other, and a gear with a larger number of teeth is close to the output shaft, and a gear with a smaller number of teeth is close to the input shaft.

When the driving motor is powered on, a magnetic flux winding on a stator part generates alternating flux. The alternating flux interacts with permanent magnet flux on the stator part, so that a rotor part drives the motor shaft to rotate, to generate a driving moment of a high rotating speed. The driving moment of the high rotating speed is transferred to the input shaft through the connection device, and then in a manner in which the gear with a small number of teeth meshes with the gear with a large number of teeth, the driving moment of the high rotating speed is converted into a driving moment of a low rotating speed, and then the driving moment of the low rotating speed is transferred to the output shaft. The driving moment of the low rotating speed is applied to the wheel shaft through the output shaft and the another component to drive the vehicle.

In this application, an input shaft 331 of the first reducer 330 is coupled to the first motor shaft 311 of the first driving motor 310 through a connection device (not shown in the figure), and an input shaft 341 of the second reducer 340 is coupled to the second motor shaft 321 of the second driving motor 320 through a connection device (not shown in the figure). In this way, the driving moment of the high rotating speed on the first driving motor 310 can be transferred to the first reducer 330, and the driving moment of the high rotating speed on the second driving motor 320 can be transferred to the second reducer 340.

Extension directions of the first output shaft 332 of the first reducer 330 and the second output shaft 342 of the second reducer 340 are in a straight line and opposite. The wheel shafts of two rear wheels of the vehicle are usually in a straight line. Therefore, if the extension directions of the output shafts are in a straight line, the output shafts of the two reducers can be better coupled to the wheel shafts.

A straight line formed by extending the first output shaft 332 of the first reducer 330 and the second output shaft 342 of the second reducer 340 is on one side of the first driving motor 310 or the second driving motor 320. In this application, the two output shafts are disposed on one side of the first driving motor 310 or the second driving motor 320, in other words, located on one side of the powertrain 300. In this case, the entire powertrain 300 is located on one side of the wheel shaft when the output shafts of the two reducers are coupled to the wheel shaft of the wheel. The powertrain designed in this application can be disposed in reserved space of an existing mainstream vehicle. This improves adaptability of the powertrain and prevents the powertrain 300 from occupying space of a trunk, a passenger compartment and a battery pack of the vehicle.

Preferably, the straight line formed by extending the two output shafts may overlap an extension direction of the first motor shaft 311 of the first driving motor 310 or the second motor shaft 321 of the second driving motor 320, to prevent a situation in which the powertrain 300 is completely located on one side of a rear (front) wheel shaft, occupying space on one side of the rear (front) wheel shaft.

With reference to FIG. 4, the following uses an example in which the straight line formed by extending the two output shafts is close to the second driving motor 320. To allow the straight line formed by extending the two input shafts to be close to the second driving motor 320, a distance between the input shaft 331 and the first output shaft 332 of the first reducer 330 is relatively large. In this case, the first output shaft 332 of the first reducer 330 is close to the second driving motor 320 and in a straight line with the extension direction of the second output shaft 342 of the second reducer 340. Optionally, the first reducer 330 may be a two-stage parallel shaft reducer. In other words, the input shaft and the output shaft are parallel to each other, and there is a specific distance between the input shaft and the output shaft.

The input shaft 341 and the second output shaft 342 of the second reducer 340 may be in a straight line, or a distance between the input shaft 341 and the second output shaft 342 is relatively small. In this case, the input shaft 341 and the second output shaft 342 of the second reducer 340 are both close to the second driving motor 320. Optionally, the second reducer 340 may be a two-stage coaxial shaft reducer. In other words, the input shaft and the output shaft are parallel to each other and in a straight line.

Preferably, the two-stage coaxial shaft reducer is a coaxial shaft planetary reducer. As a planet revolves around a star, the planetary reducer is a reducer with three planetary gears rotating around a sun gear. Because the coaxial shaft planetary reducer has characteristics such as high strength, a small volume, low noise, a large driving torque and a long service life, this application uses the coaxial shaft planetary reducer as the second reducer 340.

Existing reducers may be classified into a single-gear reducer, a double-gear reducer, or a reducer with another gear number. Reducers with different gear numbers may control the vehicle to travel in different speed ranges. In this application, the first reducer 330 and the second reducer 340 have a same gear number, to prevent inconsistent speed control ranges of two wheels which affect driving experience of a user.

In this embodiment of this application, the two driving motors and the two reducers are arranged on the vehicle. Each driving motor is coupled to a wheel shaft on one side of the vehicle through the reducer. Then, by separately controlling different driving motors or reducers, the vehicle can turn in different turning conditions, to improve turning performance of the vehicle. In addition, the two driving motors are disposed in parallel, and the output shafts of the two reducers are both close to one driving motor. In this way, when the powertrain is disposed, the entire powertrain does not excessively occupy width space of the vehicle, and the entire powertrain is located on one side of the wheel shaft, to prevent occupying the space of the trunk, the passenger compartment and the battery pack. This conforms to an arrangement manner of the existing mainstream vehicle.

An embodiment of this application further provides an electric vehicle. The electric vehicle includes at least one powertrain. The powertrain may be the powertrain described in FIG. 4 to FIG. 7 and corresponding content. Because the electric vehicle includes the powertrain, the electric vehicle has all or at least some of advantages of the powertrain.

In descriptions of this specification, specific features, structures, materials, or characteristics may be combined in a suitable manner in any one or more embodiments or examples.

Finally, it should be noted that the foregoing embodiments are only intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions deviate from the spirit and scope of the technical solutions in embodiments of this application.

## Claims

1. A powertrain, comprising:
a first driving motor, comprising a first motor shaft, and configured to drive the first motor shaft to rotate when powered on;
a second driving motor, disposed in parallel with the first driving motor, comprising a second motor shaft, and configured to drive the second motor shaft to rotate when powered on;
a first reducer, comprising a first output shaft, and configured to: mesh with the first motor shaft, convert a driving moment of a first rotating speed on the first motor shaft into a driving moment of a second rotating speed, and output the driving moment of the second rotating speed to the first output shaft, wherein the first rotating speed is faster than the second rotating speed; and
a second reducer, comprising a second output shaft, and configured to: mesh with the second motor shaft, convert a driving moment of a third rotating speed on the second motor shaft into a driving moment of a fourth rotating speed, and output the driving moment of the fourth rotating speed to the second output shaft, wherein the third rotating speed is faster than the fourth rotating speed, wherein
neither the first output shaft and the second output shaft are on a first plane, and an extension direction of the first output shaft and an extension direction of the second output shaft are in a straight line, and the first plane is a plane that is perpendicular to a connection line of centers of the two driving motors and at a contact position between the two driving motors.

2. The powertrain according to claim 1, wherein the extension direction of the first output shaft, the extension direction of the second output shaft, and an extension direction of the first motor shaft are in a straight line.

3. The powertrain according to claim 1 or 2, wherein the first reducer is a two-stage coaxial shaft reducer, and the second reducer is a two-stage parallel shaft reducer.

4. The powertrain according to claim 3, wherein the two-stage coaxial shaft reducer is a coaxial shaft planetary reducer.

5. The powertrain according to any one of claims 1 to 4, wherein the first reducer and the second reducer are both a single-gear reducer, a double-gear reducer, or a multi-gear reducer.

6. The powertrain according to any one of claims 1 to 5, wherein side faces at two ends of the first driving motor and side faces at two ends of the second driving motor are not on a same plane.

7. The powertrain according to any one of claims 1 to 6, wherein a plane on which the first motor shaft and the second motor shaft are located intersects with a horizontal plane.

8. The powertrain according to any one of claims 1 to 7, wherein the first driving motor and the second driving motor are disposed in opposite directions.

9. An electric vehicle, wherein the electric vehicle is configured to implement the powertrain according to any one of claims 1 to 8.
